# EUROPÄISCHE PATENTANMELDUNG

(11) **EP 1 848 216 A2**
(43) Veröffentlichungstag der Anmeldung: **24.10.2007**
(21) Anmeldenummer: 07005436.6
(22) Anmeldetag: 16.03.2007
(51) Int. Cl.: H04N 7/18

(54) **Videosprechstelle einer Türsprechanlage**

(30) Priorität: 20.04.2006 DE 102006018719
(71) Anmelder: Ritto GmbH & Co.KG, 35708 Haiger (DE)
(72) Erfinder: Neumann, Udo, 58579 Schalksmühle (DE); Gräfe, Martin, 35708 Haiger (DE); Harnischmacher, Stefan, Wilnsdorf (DE); Schäfer, Thomas, 35428 Langgöns-Niederkleen (DE)
(74) Vertreter: Fleck, Hermann-Joseph

(57) **Zusammenfassung**

Die Erfindung betrifft eine Türsprechanlage mit einer Bildübertragungsfunktion von einer Türstation zu einer Videosprechstelle (1), wobei die Videosprechstelle (1) einen Bildschirm (24) mit einer Bildschirmzeichenerzeugung (22), eine Audio-Eingabe (44), eine Audio-Ausgabe (43), Bedientasten (40) und einen Mikrokontroller (10) mit einem wiederbeschreibbaren Speicher (11) enthält und wobei auf dem Bildschirm (24) mittels der Bildschirmzeichenerzeugung (22) ein Auswahlmenü zur Benutzerführung erzeugbar ist.

Ist eine elektrische Schnittstelle mit einer Übertragungs-Geschwindigkeit von mindestens 1,5 Mbit/s zum Austausch von Daten zwischen dem wiederbeschreibbaren Speicher (11) und einem externen Datenverarbeitungsgerät (50) vorgesehen, kann die elektrische Schnittstelle zur Verbindung mit dem Datenverarbeitungsgerät (50) wie einem ortsfesten oder mobilen Computer verwendet werden und mit diesem mittels eines Programms zur Konfigurierung der Türsprechanlage (1) diese individuellen Kundenwünschen angepasst werden. Weiterhin können Bild- und Videodaten aus der Türsprechanlage (1) in Datenspeicher übertragen werden und zur späteren Analyse archiviert werden.

## Beschreibung

Die Erfindung betrifft eine Türsprechanlage mit einer Bildübertragungsfunktion von einer Türstation zu einer Videosprechstelle, wobei die Videosprechstelle einen Bildschirm mit einer Bildschirmzeichenerzeugung, eine Audio-Eingabe, eine Audio-Ausgabe, Bedientasten und einen Mikrokontroller mit einem wiederbeschreibbaren Speicher enthält und wobei auf dem Bildschirm mittels der Bildschirmzeichenerzeugung ein Auswahlmenü zur Benutzerführung erzeugbar ist.

Türsprechanlagen mit einer Bildübertragungsfunktion dienen dazu, vom Innenraum einer Wohnung oder eines Hauses aus mittels einer Videosprechstelle den Bereich vor der Außentür einsehen zu können und akustisch mit einer Person vor der Außentür kommunizieren zu können, ohne die Tür öffnen zu müssen. Die Anlagen bestehen typischerweise aus einer neben der Außentür angebrachten Türstation mit Videokamera, Mikrofon, Lautsprecher und einem Klingeltaster und einer in einem Innenraum angebrachten Videosprechstelle mit Monitor, Mikrofon, Lautsprecher und Bedien- sowie Anzeigeelementen. Die Bedien- und Anzeigeelemente dienen beispielsweise dazu, die Außentür zu öffnen, das Videobild manuell einzuschalten, einen in der Videsprechstelle eingebauten Kontakt oder ein Relais zu betätigen. Je nach Ausführungsform können auch andere im Haus vorhandene Videosprechstellen angerufen werden. Weiterhin können die Bedienelemente dazu dienen, die Türsprechanlage zu konfigurieren und Ruftöne auszuwählen sowie Helligkeit und Kontrast des Videobildes einzustellen sowie die Funktion einzelner Tasten des Bedienfeldes festzulegen.

Zur Bedienung und Konfiguration von Türsprechanlagen mit Bildübertragungsfunktion ist es bekannt, die Funktion der Bedienelemente auf dem Bildschirm darzustellen (On-Screen-Display-Steuerung), um mit einer geringeren Anzahl von Bedienelementen die erforderlichen Funktionen realisieren zu können und unterschiedliche Funktionsumfänge vorgeben zu können.

Nachteilig bei den bekannten Anordnungen ist, dass die Funktionen und Auswahlmenüs fest vorgegeben sind und nur mit großem Aufwand kundenindividuell gestaltet werden können. Als Folge muss ein Kunde, der eine spezielle Funktionalität benötigt, einen Typ Türsprechanlage erwerben, der diese Funktionalität beinhaltet aber oft zusätzliche Funktionen bereitstellt, die nicht benötigt oder gewünscht werden.

Es sind Programmiergeräte für Türsprechanlagen bekannt, die als Sondergeräte zur Inbetriebnahme benötigt werden und vom Hersteller zusätzlich konstruiert, erstellt und gepflegt werden müssen.

Es ist Aufgabe der Erfindung, eine Türsprechanlage bereitzustellen, die eine kundenindividuelle Gestaltung der Auswahlmenüs und Belegung der Funktionen der Bedienelemente ermöglicht und keine Sondergeräte erfordert.

Die Aufgabe wird dadurch gelöst, dass eine elektrische Schnittstelle mit einer Übertragungs-Geschwindigkeit von mindestens 1,5 Mbit/s zum Austausch von Daten zwischen dem wiederbeschreibbaren Speicher und einem externen Datenverarbeitungsgerät vorgesehen ist.

Ist in einer Videosprechstelle eine solche elektrische Schnittstelle zur Verbindung mit einem Datenverarbeitungsgerät wie einem ortsfesten oder mobilen Computer vorgesehen, kann mit diesem mittels eines Programms zur Konfigurierung der Türsprechanlage diese individuellen Kundenwünschen angepasst werden. Weiterhin können Bild- und Videodaten aus der Türsprechanlage in Datenspeicher übertragen werden und zur späteren Analyse archiviert werden. Der mobile Computer ist ein Standardgerät, das nicht eigens für den Zweck konstruiert werden muss.

Ist die elektrische Schnittstelle gemäß des Standards für Universal Serial Bus-Schnittstellen (USB) oder gemäß des Standards IEEE 1394 (Firewire) ausgebildet, kann die Videosprechstelle mit den üblichen Datenverarbeitungsgeräten verbunden werden und es ist ein ausreichend schneller Datentransfer möglich, um auch Bild- und Videodaten zu übertragen. USB-Schnittstellen sind in den Geschwindigkeitsstufen 1,5 Mbit/s, 12Mbit/s und 480 Mbit/s (USB-2) standardisiert. IEEE 1394-Schnittstellen erlauben Datenübertragungsraten von ca. 90, 400, 800, 1600 oder 3200 Mbit/s, wobei insbesondere die höheren Übertragungsgeschwindigkeiten aus beiden Standards für die Übertragung von Videodaten geeignet sind.

Ist das externe Datenverarbeitungsgerät als Mobil-Computer ausgebildet, muss kein Sondergerät für die Konfiguration der Türsprechanlage bereitgestellt werden. Es ist lediglich ein Datenverarbeitungsprogramm bereitzustellen, das die gewünschten Funktionen erlaubt. Dies erlaubt auch einem Endanwender, eine solche Konfiguration vorzunehmen, so dass er keinen Servicetechniker in Anspruch nehmen muss und so Kosten sparen kann.

Eine Weiterbildung der Erfindung sieht vor, dass das externe Datenverarbeitungsgerät als Bildspeicher und/oder Videospeicher ausgebildet ist. Durch diese Ausführung können Bild- oder Videodaten für eine spätere Verwendung und/oder Auswertung gespeichert werden. Hierbei kann es sich um einen speziellen für diesen Zweck geeigneten Speicher handeln oder die Daten werden auf eine mobile Datenverarbeitungsanlage wie einen Mobil-Computer übertragen und archiviert oder ausgewertet.

Ist zwischen der elektrische Schnittstelle und dem externen Datenverarbeitungsgerät ein Netzwerkadapter angeordnet, kann die Türsprechanlage in ein Datenverarbeitungsnetz eingebunden werden. Vorteilhafterweise ermöglicht der Netzwerkadapter eine Anbindung gemäß einem standardisierten Protokoll wie dies beispielsweise durch einen Ethernet-Adapter möglich ist.

Ist das Auswahlmenü zur Benutzerführung aus Daten aus dem wiederbeschreibbaren Speicher erzeugbar, kann das Auswahlmenü den individuellen Kundenwünschen angepasst werden und beispielhaft auch an eine gewünschte Sprache angepasst werden.

Sind in dem wiederbeschreibbaren Speicher Datensätze zur Festlegung von Funktionen der Bedienelemente ablegbar, kann die Funktion der Bedienelemente nach Kundenwunsch festgelegt werden und es sind Auswahlmenüs zur Funktion der Bedienelemente im Betrieb oder zu deren Funktion bei der Inbetriebnahme, bei Videospeicherbetrieb oder bei einer Netzwerkanbindung einstellbar.

Sind auf dem Bildschirm ein Bildsignal einer Türstation und/oder das Auswahlmenü zur Benutzerführung darstellbar, kann das Bildsignal alleine dargestellt werden oder aber auch zur Vereinfachung der Bedienung gleichzeitig die Funktion der Bedienelemente mit dem Bildsignal überlagert sein. Für eine Konfiguration der Anlage können die Menüs auch ohne Bildsignal-Hintergrund dargestellt werden.

Ist die Videosprechstelle zur Darstellung von Daten aus einem Netzwerk und zur Eingabe von Daten in das Netzwerk ausgebildet, kann sie der Übertragung von Audio- und Video-Daten in das Netzwerk dienen, wodurch diese auch an entfernten Stationen des Netzwerks eingesehen werden können. Über das Netzwerk können in dieser Anordnung Sprachdateien mit der an der Wohneinheit außen liegenden Türstation ausgetauscht werden. Weiterhin können an der Videosprechstelle E-Mails oder ähnliche Informationsdateien eingesehen und bearbeitet werden.

Die Erfindung wird im Folgenden anhand der in den Figuren dargestellten Ausführungsbeispiele näher erläutert. Es zeigen:
Fig. 1 eine Videosprechstelle einer Türsprechanlage
Fig. 2 einen schematischen Aufbau der Videosprechstelle
Fig. 3 einen ersten Datensatz für ein Auswahlmenü
Fig. 4 einen zweiten Datensatz für das Auswahlmenü
Fig. 5 ein Anschlussschema für einen Speicherbaustein
Fig. 6 ein Anschlussschema für ein Netzwerkadapter

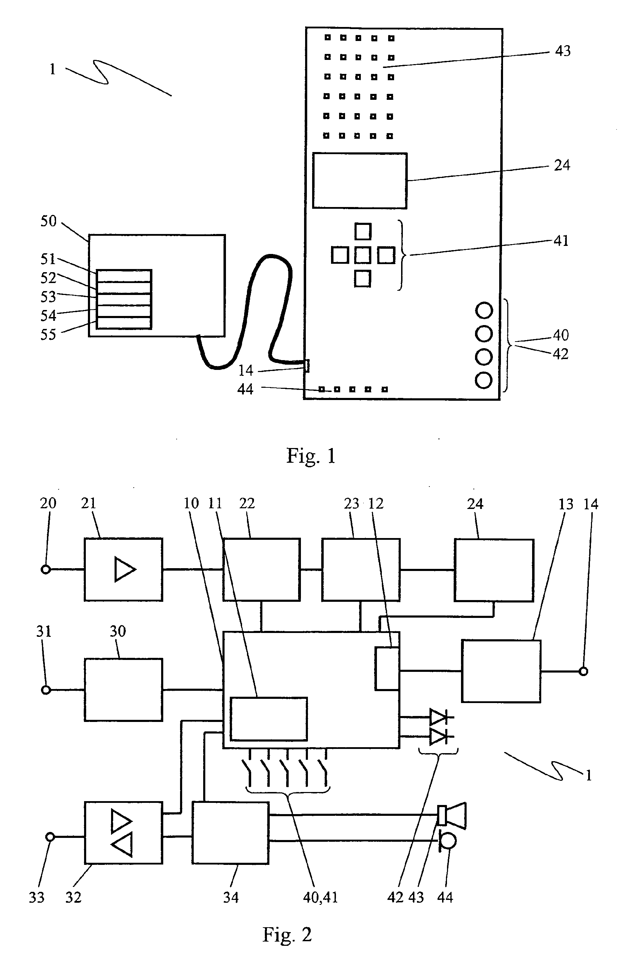

Die Fig. 1 zeigt eine Videosprechstelle 1 einer Türsprechanlage mit einer Bildübertragungsfunktion. In der Videosprechstelle 1 sind eine Audio-Ausgabe 43, ein Bildschirm 24, Bedienelemente 40, Steuertasten 41, Anzeigeelemente 42 und eine Audioeingabe 44 vorgesehen. Die Videosprechstelle 1 ist allgemein im Innenraum einer Wohneinheit angebracht und mit einer hier nicht dargestellten Türstation an der Außenseite der Wohneinheit verbunden. Die Audio-Ausgabe 43 und die Audio-Eingabe 44 sind mit entsprechenden Einrichtungen in der Türstation verbunden und dienen der Sprachübertragung. Der Bildschirm 24 ist mit einem Bildaufnahmegerät in der Türstation verbunden und ermöglicht die Beobachtung des Raumes vor der Außentür der Wohneinheit ohne die Außentür zu öffnen. Weiterhin kann der Bildschirm 24 zur Darstellung von Funktionen der Bedienelemente 40 dienen. Diese können in unterschiedlichen Betriebszuständen der Videosprechstelle 1 verschieden sein und beispielsweise im Normalbetrieb eine Öffnung der Außentür ermöglichen und in einem Konfigurationsmenü eine Einstellung der Helligkeit oder des Kontrastes der Bilddarstellung auf dem Bildschirm 24 bewirken.

Erfindungsgemäß weist die Videosprechstelle 1 eine USB-Buchse 14 auf, mittels derer sie mit einem externen Datenverarbeitungsgerät 50, beispielsweise einem Mobil-Computer, verbunden werden kann. In dem Datenverarbeitungsgerät 50 sind Datensätze A bis E 51 bis 55 gespeichert, die Informationen für Menüs zur Bedienung der Videosprechstelle 1 und/oder über die Funktion der Bedienelemente 40 und der Anzeigeelemente 42 beinhalten, welche auf dem Bildschirm 24 dargestellt werden können.

Figur 2 zeigt schematisch den inneren Aufbau der Videosprechstelle 1. Ein Mikrocontroller 10 mit einem wiederbeschreibbaren Speicher 11 steuert eine Bildschirmzeichenerzeugung 22, eine Bildschirmansteuerung 23 und den Bildschirm 24. Die Bildschirmzeichenerzeugung 22 ist über eine Videoanpassung 21 mit einem Video-eingang 20 verbunden. Weiterhin ist der Mikrocontroller 10 mit einem Schaltrelais 30 mit einem Schaltausgang 31 verbunden. Über eine USB-Schnittstelle 12 ist der Mikrocontroller 10 mit einer ersten USB-Anschaltung 13 verbunden, die wiederum mit der USB-Buchse 14 verbunden ist. Der Mikrocontroller 10 ist mit einer Audio-/Datensignalanpassung 32 verbunden, die über eine Audio-/Daten-Leitung 33 Signale mit der hier nicht dargestellten Türstation austauscht. Der Mikrocontroller 10 wirkt auf eine Sprach- und Tonsteuerung 34, die mit der Audio-Ausgabe 43 und der Audio-Eingabe 44 verbunden ist. Über die Bedienelemente 40 und die Steuertasten 41 können manuelle Eingaben an den Mikrocontroller 10 gegeben werden; über die Anzeigeelemente 42 können Signale an den Benutzer gegeben werden.

Im Betrieb wird von der hier nicht dargestellten Türstation ein Rufsignal über die Audio-/Daten-Leitung 33 an den Mikrocontroller 10 gegeben, der daraufhin ein Ruftonsignal über die Audio-Ausgabe 43 abgeben kann und den Bildschirm 24 einschalten kann. Weiterhin können über die Audio-/Daten-Leitung 33 Audiosignale zwischen der Türstation und der Audio-Ausgabe 43 als auch der Audio-Eingabe 44 ausgetauscht werden. Der Benutzer kann eine in der Nähe der Türstation befindliche Außentür entriegeln, indem er eines der Bedienelemente 40 betätigt. Der Mikrocontroller 10 übermittelt den Befehl über die Audio-/Datensignalanpassung 32 und die Audio/Datenleitung 33 an die Türstation, welche die Außentür entriegelt.

Ein Bildsignal von der Türstation wird über den Video-Eingang 20 aufgenommen, in der Videosignalanpassung 21 aufbereitet und über die Bildschirmzeichenerzeugung 22 und die Bildschirmansteuerung 23 an den Bildschirm 24 weitergeleitet, so dass es dort vom Benutzer angesehen werden kann. Textinformationen, wie die Beschreibung der Funktionen der Bedienelemente 40, können auf dem Bildschirm 24 dargestellt werden, indem die der Mikrocontroller 10 die Informationen aus dem wiederbeschreibbaren Speicher 11 liest und an die Bildschirmzeichenerzeugung 22 weiterleitet, wo sie in ihre grafische Gestaltung umgesetzt werden. Von dort werden sie über die Bildschirmansteuerung 23 an den Bildschirm 24 weitergegeben und alleine oder zusätzlich zum Bildsignal der Türstation dargestellt.

An die USB-Buchse 14 kann ein hier nicht dargestelltes externes Datenverarbeitungsgerät 50 angeschlossen werden, von dem Datensätze A bis E 51 bis 55 über die erste USB-Anschaltung 13 und die USB-Schnittstelle 12 in den wiederbeschreibbaren Speicher 11 gespeichert werden können. Für ein Konfigurationsmenü wird beispielsweise der Datensatz A 51 über die USB-Buchse 14 in den wiederbeschreibbaren Speicher 11 geladen.

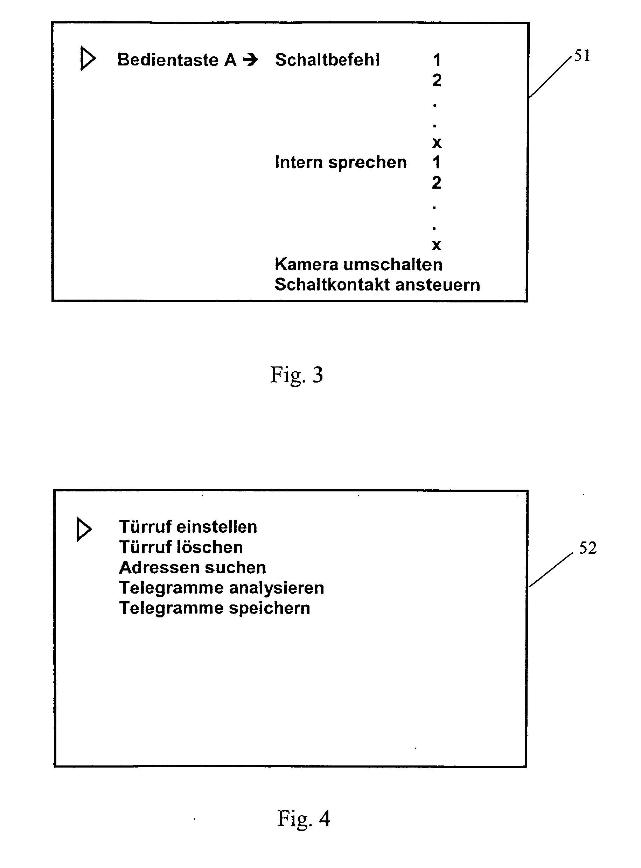

In Figur 3 ist beispielhaft der Datensatz A 51 dargestellt, wie er für eine Festlegung der Funktion eines der Bedienelemente 40 verwendet werden kann. In dem aus dem externen Datenverarbeitungsgerät 50 geladenen und auf dem Bildschirm 24 dargestellten Auswahlmenü kann, beispielsweise mittels der in Figur 1 gezeigten Steuertasten 41, ausgewählt werden, ob die Bedientaste A einen Schaltbefehl auslösen soll, eine interne Sprechverbindung zu einer anderen Videosprechstelle aufbauen soll, eine externe Kamera umschalten soll oder einen Schaltkontakt ansteuern soll.

In Figur 4 ist beispielhaft der Datensatz B 52 dargestellt, wie er für eine Konfiguration einer externen Türstation verwendet werden kann. Mit dem aus dem externen Datenverarbeitungsgerät 50 geladenen Auswahlmenü kann der Türruf eingestellt oder gelöscht werden, es kann eine Adresse eines externen Gerätes gesucht werden oder ein Telegramm analysiert oder gespeichert werden. Hat der Benutzer die vom Datensatz B 52 ermöglichten Funktionen ausgeführt, wird aus dem externen Datenverarbeitungsgerät 50 der für den Normalbetrieb vorgesehene der Datensätze A bis E 51 bis 55 geladenen und das Datenverarbeitungsgerät 50 von der USB-Buchse 14 getrennt.

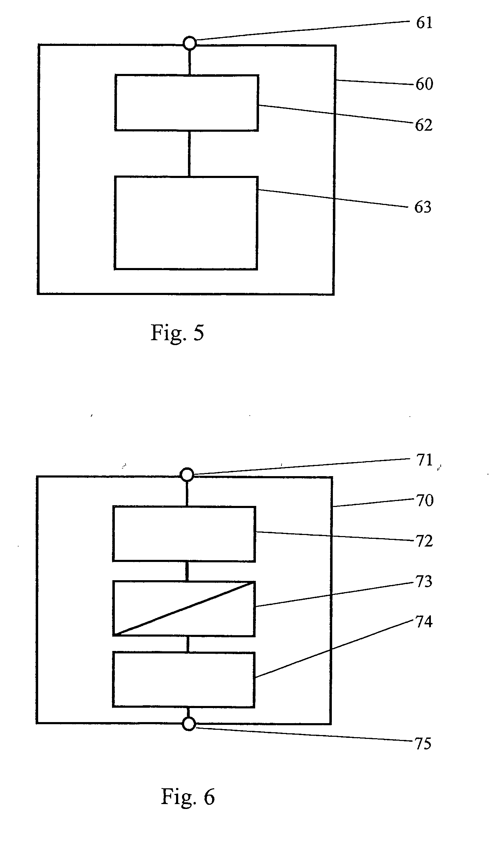

Die erfindungsgemäß vorgesehene USB-Schnittstelle 12 mit der ersten USB-Anschaltung 13 und der USB-Buchse 14 ermöglicht weiterhin eine in Figur 5 dargestellte Videospeicherfunktion. Die USB-Buchse 14 ist mit einem ersten USB-Stecker 61 verbindbar, der Teil eines Video-Speicheradapters 60 ist. Von dem ersten USB-Stecker 61 können Video-Daten über eine zweite USB-Anschaltung 62 an den Video-Speicherbaustein 63 weitergeleitet und dort abgelegt werden. Zur Verwendung dieser Funktionalität wird zunächst aus dem externen Datenverarbeitungsgerät 50 ein geeigneter Datensatz A bis E 51 bis 55 mit Funktionen für speichern, abrufen und löschen von Video-Daten geladen und dann der Video-Speicheradapter 60 mittels des ersten USB-Steckers 61 mit der USB-Buchse 14 verbunden. Zur Auswertung und weiteren Verwendung der Video-Daten können diese aus dem Video-Speicherbaustein 63 über die zweite USB-Anschaltung 62 und den ersten USB-Stecker 61 in die Videosprechstelle 1 eingelesen oder beispielsweise an ein Datenverarbeitungsgerät mit USB-Buchse weitergeleitet werden.

Mittels einem in Figur 6 dargestellten Netzwerkadapter 70 kann die Videosprechstelle 1 mit einem Netzwerk, beispielsweise einem Ethernet, verbunden werden und kann dann als Umsetzer für das Netzwerk dienen und Daten aus dem Netzwerk darstellen und/oder Daten in das Netzwerk senden. Der Netzwerkadapter 70 ist mittels eines zweiten USB-Steckers 71 mit der USB-Buchse 14 verbindbar. Der Datenaustausch zwischen dem zweiten USB-Stecker 71 und einem Ethernetanschluss 75 erfolgt dabei über eine dritte USB-Anschaltung 72, eine USB-Ethernet-Konvertereinheit 73 und eine Ethernet-Anschaltung 74 zum Ethernetanschluss 75 sowie auf dem in umgekehrter Reihenfolge der Bauteile verlaufenden Rückweg.

Die dargestellten Ausführungsbeispiele zeigen die erfindungsgemäße Speicherung von kundenspezifischen Menüs in der Videosprechstelle 1 sowie die Funktionen der Speicherung von Video-Daten und der Verbindung der Videosprechstelle 1 mit einem Netzwerk.

## Patentansprüche

1. Türsprechanlage mit einer Bildübertragungsfunktion von einer Türstation zu einer Videosprechstelle (1), wobei die Videosprechstelle (1) einen Bildschirm (24) mit einer Bildschirmzeichenerzeugung (22), eine Audio-Eingabe (44), eine Audio-Ausgabe (43), Bedienelemente (40) und einen Mikrokontroller (10) mit einem wiederbeschreibbaren Speicher (11) enthält und wobei auf dem Bildschirm (24) mittels der Bildschirmzeichenerzeugung (22) ein Auswahlmenü zur Benutzerführung erzeugbar ist,
**dadurch gekennzeichnet,**
**dass** eine elektrische Schnittstelle mit einer Übertragungs-Geschwindigkeit von mindestens 1,5 Mbit/s zum Austausch von Daten zwischen dem wiederbeschreibbaren Speicher (11) und einem externen Datenverarbeitungsgerät (50) vorgesehen ist.

2. Türsprechanlage (1) nach Anspruch 1,
**dadurch gekennzeichnet,**
**dass** die elektrische Schnittstelle gemäß des Standards für Universal Serial Bus-Schnittstellen oder gemäß des Standards IEEE 1394 ausgebildet ist.

3. Türsprechanlage (1) nach Anspruch 1 oder 2,
**dadurch gekennzeichnet,**
**dass** das externe Datenverarbeitungsgerät (50) als Mobil-Computer ausgebildet ist.

4. Türsprechanlage (1) nach Anspruch 1 oder 2,
**dadurch gekennzeichnet,**
**dass** das externe Datenverarbeitungsgerät (50) als Bildspeicher und/oder Videospeicher ausgebildet ist.

5. Türsprechanlage (1) nach einem der Ansprüche 1 bis 4,
**dadurch gekennzeichnet,**
**dass** zwischen der elektrische Schnittstelle und dem externen Datenverarbeitungsgerät (50) ein Netzwerkadapter angeordnet ist.

6. Türsprechanlage (1) nach einem der Ansprüche 1 bis 5,
**dadurch gekennzeichnet,**
**dass** das Auswahlmenü zur Benutzerführung aus Daten aus dem wiederbeschreibbaren Speicher (11) erzeugbar ist.

7. Türsprechanlage (1) nach einem der Ansprüche 1 bis 6,
**dadurch gekennzeichnet,**
**dass** in dem wiederbeschreibbaren Speicher (11) Datensätze zur Festlegung von Funktionen der Bedienelemente (40) ablegbar sind.

8. Türsprechanlage (1) nach einem der Ansprüche 1 bis 7,
**dadurch gekennzeichnet,**
**dass** auf dem Bildschirm (24) ein Bildsignal einer Türstation und/oder das Auswahlmenü zur Benutzerführung darstellbar sind.

9. Türsprechanlage (1) nach einem der Ansprüche 1 bis 8,
**dadurch gekennzeichnet,**
**dass** die Videosprechstelle (1) zur Darstellung von Daten aus einem Netzwerk und zur Eingabe von Daten in ein Netzwerk ausgebildet ist.
